# EUROPEAN PATENT SPECIFICATION

(11) **EP 3 543 783 B1**
(45) Date of publication and mention of the grant of the patent: **20.04.2022**
(21) Application number: 18865380.2
(22) Date of filing: 07.03.2018
(51) Int. Cl.: G02F 1/167, G02F 1/1343, G02F 1/1679

(54) **ELECTROPHORETIC DISPLAY MODULE WITH ELECTROPHORETIC FLUID BARRIER ARRAY AND METHOD FOR MANUFACTURING THE SAME**
ELEKTROPHORETISCHES ANZEIGEMODUL MIT SPERRSCHICHTANORDNUNG FÜR DIE ELEKTROPHORETISCHE FLÜSSIGKEIT UND VERFAHREN ZUR HERSTELLUNG DESSELBEN
MODULE D'AFFICHAGE ELECTROPHORETIQUE AVEC MATRICE DE BARRIERE POUR LE LIQUIDE ELECTROPHORETIQUE ET SON PROCEDE DE PRODUCTION

(30) Priority: 19.01.2018 CN 201810054139; 01.03.2018 CN 201810171462; 01.03.2018 CN 201810171783
(43) Date of publication of application: 25.09.2019
(73) Proprietor: Wuxi Vision Peak Technology Co., Ltd., Wuxi, Jiangsu 214028 (CN)
(72) Inventor: BAO, Jin, Wuxi, Jiangsu 214028 (CN); ZHANG, Lei, Wuxi, Jiangsu 214028 (CN); CHEN, Shan, Wuxi, Jiangsu 214028 (CN)
(74) Representative: Berkkam, Ayfer
(86) International application number: PCT/CN2018/078221
(87) International publication number: WO 2019/140759

(56) References cited:
- EP-A1- 1 939 677
- EP-A1- 2 293 142
- EP-A2- 2 221 661
- WO-A1-2007/116732
- CN-A- 104 216 193
- CN-A- 107 357 109
- CN-U- 203 149 253
- JP-A- 2007 065 288
- US-A- 4 093 534
- US-A1- 2011 175 856
- US-A1- 2017 068 145

## Description

### Technical Field

The present invention relates to an electrophoretic display module and a manufacturing method thereof, which belongs to the field of electronic display technology.

### Background

The electrophoresis display uses the phoresis phenomenon of the charged colloidal particles under the action of an electric field to display the images and words by driving the electrophoretic particles with different photoelectric properties by the electric field. Compared with the display technique in the prior art, the electrophoretic display has the following characteristics: flexible and easy to bend, light, thin, high contrast, low energy consumption, large visual angle, readable under sunlight, image bistable state, and easy mass production etc.

Electrophoretic display technique was first proposed in the 1970s. The patent NO. US3892568 discloses a process of preparing an electrophoretic display material containing at least one type of electrophoretic particles. The patent NO. JP1086116 discloses an electrophoretic display system containing at least one type of electrophoretic particles and the electrophoretic liquid is encapsulated with microcapsules. The patent NO. US6930818 discloses an electrophoretic display unit with the electrophoretic liquid encapsulated by a micro-cup structure. The patents NO. US5930026, US5961804, US6017584, and US6120588 disclose a microencapsulated electrophoretic display unit, wherein the electrophoretic medium includes two or more types of electrophoretic particles having different photoelectric properties. Taking a panoramic view of the prior art, the micro-cup electronic ink display screen and the microcapsule electronic ink display screen are both based on tiny cavity structures, namely, micro-cups and microcapsules. These two types of microstructures play a role of dispersedly encapsulating the electrophoretic medium.

Although the display screens with these two kinds of structures have been used in actual products, they have the following deficiencies.
1) The microcapsules and the micro-cups themselves have no display function, and are mainly made of transparent materials having a poor covering power. Moreover, a large amount of these materials is used in the entire electrophoretic display system, which lowers the covering power of the entire display screen, the contrast, the resolution, and the service life.
2) There is no doubt that the use of the microcapsules and micro-cup structures will increase the thickness of the entire electrophoretic display material layer, thereby causing lowered contrast and resolution of the display screen, slower response speed, increased driving voltage, slower refresh speed, increased power consumption, and narrowed operating temperature range.
3) The processes of preparing the microcapsules and micro-cups are too complicated, which raises difficulty and waste in manufacturing, reduced yield, material waste, and high manufacturing cost.

Documents considered to be relevant include US 2017/068145 A1 (NAKAMURA KIYOSHI [JP] ET AL) 9 March 2017, which discloses an electrophoretic display device that includes an element substrate, a counter substrate disposed opposite to the element substrate, a partition being disposed between the element substrate and the counter substrate, and a dispersion liquid containing electrophoretic particles and the dispersion medium, which is disposed in a cell defined by the partition.

WO 2007/116732 A1 (BROTHER IND LTD [JP]; KURITA MASAAKI [JP]; YOSHIMURA CHISATO [JP]) 18 October 2007 discloses a method for manufacturing a first substrate having pixel electrode and partition formed in electrophoresis display medium and electrophoresis display medium, in which a partition forming material is painted or laminated on the surface of a TFT forming substrate where a TFT element is formed for each pixel and pressure is applied by a stamp having a convex portion and a concave portion.

EP 2293142 A1 (BRIDGESTONE CORP [JP]) 9 March 2011 discloses an electronic paper that includes two flexible substrates opposing each other, at least one of which is transparent; a partition wall for sectioning a space between the two flexible substrates into a plurality of cells; and, a display medium consisting of a particle group and sealed in the plurality of cells.

EP 1939677 A1 (BROTHER KOGYO KABUSHIKI KAISHA [JP] 2 July 2008 discloses a method of forming a partition and a spacer on a substrate of an electrophoretic display medium. which includes a first resist application step where a first negative resist is applied on the first substrate, a first exposure step where the first negative resist is exposed to light through a first mask having an aperture pattern for exposing a pattern of the partition to light, a second resist application step where a second negative resist is applied on the first negative resist, a second exposure step where the second negative resist and the first negative resist are exposed to light through a second mask having an aperture pattern for exposing a pattern of the spacer to light, and a development step where the first negative resist and the second negative resist are developed.

JP 2007 065288 A MITSUBISHI PENCIL CO) 15 March 2007 discloses an electrophoretic display medium that has a pair of light-transmissive substrates and at least one of which has light-transmissive electrodes and. The liquid for electrophoretic display which is charged between the electrodes and of the pair of substrates opposed to each other and contains at least one kind of electrophoretic particles, and seal parts and sealing the gap between the substrates.

EP 2221661 A2 (PRIME VIEW INT CO LTD [TW]) 25 August 2010 discloses a reflective display apparatus that includes a first substrate, a second substrate, a display layer and a light shielding layer. The first substrate has a driving circuit layer and the second substrate has a transparent electrode layer opposite to the driving circuit layer. The light shielding layer can prevent the driving circuit layer from being illuminated by external light rays.

US 2011/175856 A1 (HONG WANG-SU [KR] ET AL) 21 July 2011 discloses an electrophoretic display panel that includes a first member, a second member, an electrophoretic layer and an outer member. The first member includes a first substrate and a pixel electrode formed on the first substrate. The first substrate has a display area and a dummy area disposed outside of the display area. The second member includes a second substrate facing the first substrate and a common electrode formed on a first surface of the second substrate. The outer member covers the dummy area and blocks light.

### Summary

The objective of the present invention is to provide an electrophoretic display module with an electrophoretic fluid barrier array (in the following also referred to as patterned structure)

and a manufacturing method thereof to solve the problems of the electronic display screen in the prior art, which can directly replace the existing micro-cup structure or microcapsule with the electrophoretic medium. Moreover, the electrophoretic medium is provided with an electrophoretic fluid barrier array for uniformly dispersing and stabilizing the electrophoretic medium. Compared with the traditional electrophoretic display screen with the microstructure, the display screen with the patterned structure is much larger than the traditional display screen with the microstructure, and the complicated encapsulation process required by the traditional microstructure is unnecessary. The display screen with the patterned structure has simple display structure, uniform and controllable thickness of the display layer, and is thinner. Moreover, the contrast is increased by more than 10%. The response time is reduced to less than 80 milliseconds. The manufacturing process is simple. The yield and display effect are improved, and the manufacturing cost is reduced.

In order to achieve the above-mentioned technical objective, the technical solutions of the present invention are as follows. An electrophoretic display module according to appended independent claim 1 is provided.

Preferred embodiments of the electrophoretic display module are defined in the appended dependent claims 2-7.

In order to achieve the above-mentioned technical objective, the present invention also provides a method of manufacturing an electrophoretic display module according to appended independent claim 8.

A preferred embodiment of the method of manufacturing an electrophoretic display module is defined in appended dependent claim 9.

Compared with the traditional electronic ink display screen, the present invention has the following advantages.
1) Compared with the traditional microstructure electrophoretic display screen, without involving the traditional micro-capsule or micro-cup in the display, the display effects will be affected. In the present invention, the micro-capsule or the micro-cup is replaced with the electrophoretic medium, so the display effects are better and the contrast is increased by more than 10%.
2) The electrophoretic medium of the present invention can reduce the thickness of the entire electrophoretic display layer, reduce the response time to less than 80 milliseconds, reduce the driving voltage to +1.5 V to +8V and -8V to -1.5V, and broaden the operating temperature range to -30-70°C. Meanwhile, the production cost is reduced.
3) In the present invention, a patterned electrophoretic fluid barrier array is provided between the pixel electrode and the transparent electrode, which can effectively and uniformly disperse and stabilize the electrophoretic medium, and improve the display effects.
4) The display area protection layer of the present invention protects the electrophoretic medium of the display area, and plays a role of lightproof and insulation.
5) The lightproof layer and the insulating adhesive layer of the present invention are used to protect the pixel electrode from optical radiation, isolate the electrophoretic medium and the pixel electrode, and prevent the electrophoretic medium from damaging the pixel electrode.
6) The processes of the present invention can be used to manufacture a large-scale electrophoretic display module more than 100 inches.

### Brief Description of the Drawings

Fig. 1 is a side view showing the structure of Embodiment 1 of the present invention.
Fig. 2 is a cross-sectional view showing the structure of portion A of Fig. 1.
Fig. 3 is a cross-sectional view showing a structure of an electrophoretic display module without an insulating lightproof adhesive layer and which does therefore not fall under the claimed invention.
Fig. 4 is a side view showing the structure of another example not according to the claimed invention.
Fig. 5 is a cross-sectional view showing the structure of portion A of Fig. 4.
Fig. 6 is a side view showing the structure of another example not according to the claimed invention.
Fig. 7 is a cross-sectional view showing the structure of portion A of Fig. 6.

The description of reference designators: 1: transparent electrode; 2: electrically conductive layer; 3: electrophoretic medium; 4: supporting microsphere; 5: lightproof insulating adhesive layer; 6: spacer frame; 7: TFT glass substrate; 8: display area protection layer; 9: RTV silicone; 10: electrically conductive silver paste; 11: IC module; 12: flexible circuit board; 13: pixel electrode; 14: electrophoretic fluid barrier array.

### Detailed Description of the Embodiments

The present invention will be further described hereinafter with reference to the specific drawings and embodiments.

The present invention is not limited to the following embodiments, and the drawings being referred to in the following description are intended to illustrate the contents of the present invention, namely, the present invention is not limited to the structure of the electronic ink display screen exemplified in the drawings.

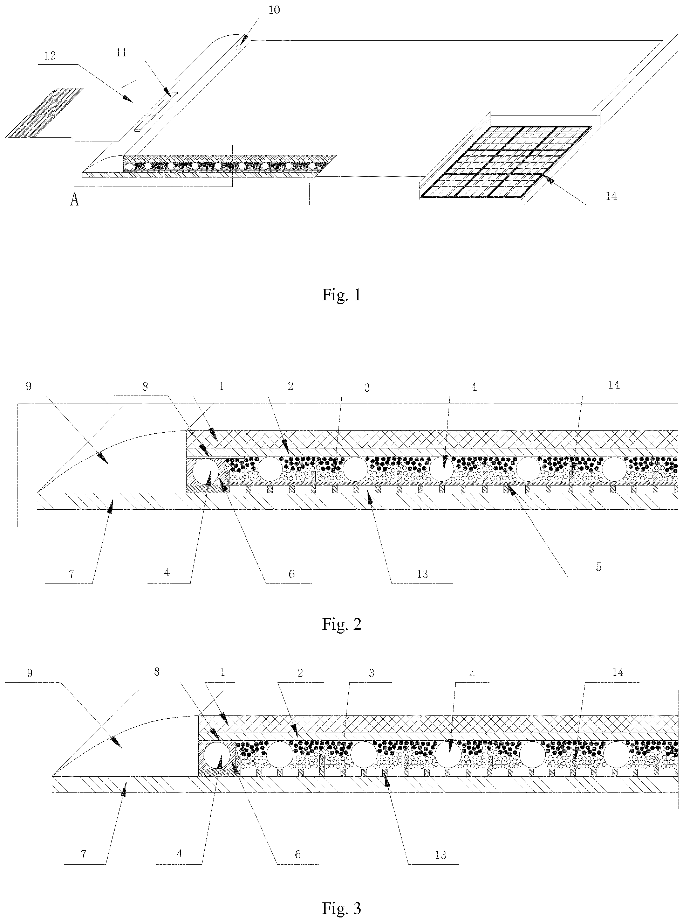

As shown in Fig. 1 and Fig. 2, in Embodiment 1, a double-particle electronic ink display screen is take as an example. An electrophoretic display module includes a pixel electrode 13 and a transparent electrode 1 located above the pixel electrode 13, characterized in that an electrophoretic medium 3 is provided between the pixel electrode 13 and the transparent electrode 1, and a spacer frame 6 is located around the electrophoretic medium 3. The electrophoretic fluid barrier array 14 for uniformly dispersing and stabilizing the electrophoretic medium 3 is provided on the pixel electrode 13. The electrophoretic fluid barrier array 14 includes a plurality of electrophoretic fluid barrier frames distributed in an array, and the pixel electrode 13 includes a plurality of pixel electrode units arranged in an array. The pixel electrode 13 is internally embedded in the TFT glass substrate 7. The pixel electrode 13 and the electrophoretic medium 3 are adhered to each other by a lightproof insulating adhesive layer 5. An electrically conductive layer 2 is provided between the electrophoretic medium 3 and the transparent electrode 1, and an electrically conductive layer 2 is also provided between the spacer frame 6 and the transparent electrode 1. The electrically conductive layer 2 may be Indium Tin Oxide (ITO), silver nanowires, graphene, and carbon nanotubes etc. A substrate of the transparent electrode 1 includes glass, plastic, and glass or plastic with a protection layer etc. The plastic substrate includes Polyimide (PI), Polyethylene Naphthalate (PEN), and Polyethylene Terephthalate (PET) etc. The protection layer is deposited onto the surface of the substrate by the evaporation deposition. The protection layer plays a role of waterproofing and ultraviolet proof. A display area protection layer 8 is provided between the spacer frame 6 and the electrically conductive layer 2, and the display area protection layer 8 is also provided between the edge of the electrophoretic medium 3 and the electrically conductive layer 2. The material of the display area protection layer 8 includes polyurethane, acrylic resin, epoxy resin or natural polymer. An IC module 11 and a flexible circuit board 12 are provided on one side of the spacer frame 6, and are attached to the pixel electrode 13 by an electrically conductive adhesive tape. The edges of the IC module 11, the flexible circuit board 12 and the electrically conductive adhesive tape are fixed and sealed on the pixel electrode 13 by an RTV silicone 9.

Each electrophoretic fluid barrier frame in the electrophoretic fluid barrier array 14 surrounds 1-100 pixel electrode units, preferably 4-20 pixel electrode units. The width of the electrophoretic fluid barrier frame in the electrophoretic fluid barrier array 14 is not less than the gap between the pixel electrode units in the pixel electrode 13. The height of the electrophoretic fluid barrier frame is not more than 20 microns, preferably not more than 10 microns. There is a gap between the electrophoretic fluid barrier frame and the transparent electrode 1. The material of the electrophoretic fluid barrier frame in the electrophoretic fluid barrier array 14 and the material of the spacer frame 6 include acrylic resin, urethane resin, epoxy resin, organic silicone resin or silicon dioxide.

The material of the lightproof insulating adhesive layer 5 includes polyurethane, acrylic resin, epoxy resin, and natural polymer etc. The adhesive may be water type, solvent type, hot-melt type and photo curing type, preferably, the water type and the photo curing type, so as to protect the pixel electrode 13 from being irradiated, thereby affecting the performance and the service life of the display screen. Meanwhile, the electrophoretic medium 3 and the pixel electrode 13 are isolated to prevent the electrophoretic medium 3 from damaging the pixel electrode 13.

The electrophoretic medium 3 has a thickness of 2-300 microns, and the electrophoretic fluid of the electrophoretic medium 3 has a viscosity of 0.10-100 Pa-s. The electrophoretic medium 3 includes a plurality of white particles and a plurality of black particles. The pixel electrode 13 may include a segment code and a dot matrix. Under the different electric fields applied to the white particles and black particles and driven by the IC module 11, the electrophoretic particles can move through the gap between the electrophoretic fluid barrier frame and the transparent electrode 1, so as to display the black and white colors on the display screen, thereby improving the contrast and display effect of the display screen. The electrophoretic fluid barrier frame protects the electrophoretic medium 3 from moving freely on the horizontal surface, thereby ensuring the stability of the electrophoretic medium 3. The substrate of the pixel electrode 13 may be glass and plastic etc. The plastic substrate includes PI, PEN, and PET etc. The supporting microspheres 4 may be provided in the spacer frame 3 and the electrophoretic medium 3, and the material of the supporting microspheres 4 includes resin microspheres and glass microspheres. The supporting microspheres 4 have a diameter of 2-60 µm, which depends on the application of the display module. The supporting microsphere 4 is pre-coated on the lightproof insulating adhesive layer 5 on the surface of the pixel electrode 13, and the material of the supporting microsphere includes resin microspheres and glass microspheres. The supporting microsphere 4 has a diameter of 2-60 microns, preferably 5-30 microns.

Fig. 3 shows an electrophoretic display module not according to the claimed invention, since no lightproof insulating adhesive layer 5 is provided between the pixel electrode 13 and the electrophoretic medium 3.

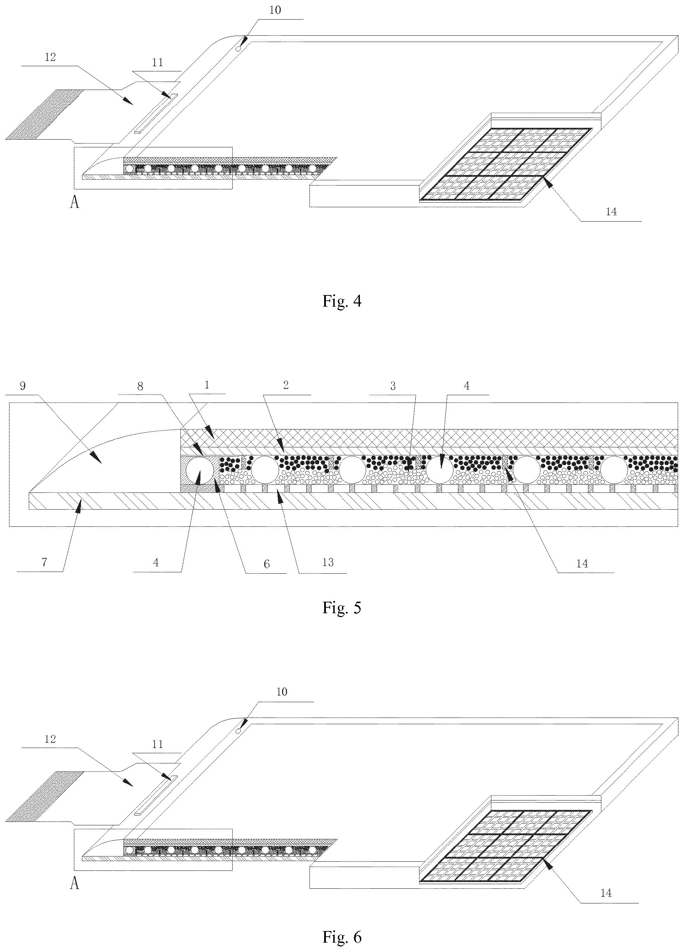

As shown in Fig. 4 and Fig. 5, in another example not according to the claimed invention, a double-particle electronic ink display screen is taken as an example. A electrophoretic display module includes a pixel electrode 13 and a transparent electrode 1 located above the pixel electrode 13, characterized in that an electrophoretic medium 3 is provided between the pixel electrode 13 and the transparent electrode 1, and a spacer frame 6 is located around the electrophoretic medium 3. No lightproof insulating adhesive layer 5 is provided between the pixel electrode 13 and the electrophoretic medium 3. The electrophoretic fluid barrier array 14 for uniformly dispersing and stabilizing the electrophoretic medium 3 is provided on the transparent electrode 13. The electrophoretic fluid barrier array 14 includes a plurality of electrophoretic fluid barrier frames distributed in an array, and the pixel electrode 13 includes a plurality of pixel electrode units arranged in an array. Each electrophoretic fluid barrier frame of the electrophoretic fluid barrier array 14 includes 4-20 pixel electrode units. There is a gap between the electrophoretic fluid barrier frame and the pixel electrode 13. The pixel electrode 13 may include a segment code and a dot matrix. Under the drive of the IC module, the electrophoretic particles can move through the gap between the electrophoretic fluid barrier frame and the pixel electrode 13. The electrophoretic fluid barrier frame protects the electrophoretic medium 3 from moving freely on the horizontal surface, which ensures the stability of the electrophoretic medium 3, makes the display screen display black and white colors, and improves the contrast and display effect of the display screen.

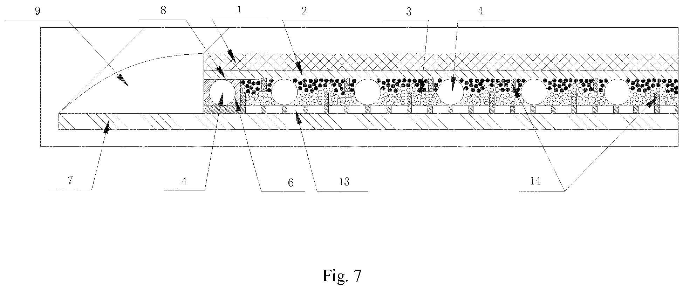

As shown in Fig. 6 and Fig. 7, in another example not according to the claimed invention , a double-particle electronic ink display screen is taken as an example. A electrophoretic display module includes a pixel electrode 13 and a transparent electrode 1 located above the pixel electrode 13, characterized in that an electrophoretic medium 3 is provided between the pixel electrode 13 and the transparent electrode 1, and a spacer frame 6 is located around the electrophoretic medium 3. No lightproof insulating adhesive layer 5 is provided between the pixel electrode 13 and the electrophoretic medium 3. The electrophoretic fluid barrier array 14 for uniformly dispersing and stabilizing the electrophoretic medium 3 is provided both on the pixel electrode 13 and the transparent electrode 1. The electrophoretic fluid barrier array 14 includes a plurality of electrophoretic fluid barrier frames distributed in an array, and the pixel electrode 13 includes a plurality of pixel electrode units arranged in an array. Each electrophoretic fluid barrier frame of the electrophoretic fluid barrier array 14 includes 4-20 pixel electrode units. The electrophoretic fluid barrier frame on the pixel electrode 13 and the electrophoretic fluid barrier frame on the transparent electrode 1 are located away from each other for a certain distance and are not in a one-to-one correspondence, so as to ensure that the electrophoretic fluid in the electrophoretic medium 3 can move freely. The pixel electrode 13 may include segment code or dot matrix etc. Under the drive of the IC module. the electrophoretic particles can move through gaps between the electrophoretic fluid barrier frames, between the electrophoretic fluid barrier frame and the transparent electrode 1, and between the electrophoretic fluid barrier frame and the pixel electrode 13. The electrophoretic fluid barrier frame protects the electrophoretic medium 3 from moving freely on the horizontal surface, which ensures the stability of the electrophoretic medium 3, enables the display screen to display black and white colors, and improves the contrast and display effect of the display screen.

A method for manufacturing an electrophoretic display module according to the above-mentioned embodiment includes the following steps.
Step 1: the pixel electrode 13 is embedded in a TFT glass substrate 7, and the TFT glass substrate 7 is placed on an adhesive dispensing platform. The surface of the pixel electrode 13 is pre-coated with supporting microspheres 4. Before coating the supporting microspheres 4, a lightproof insulating adhesive layer 5 is coated in advance.
Step 2: an electrophoretic fluid barrier array 14 is pre-prepared on the pixel electrode 13 The electrophoretic fluid barrier array 14 is pre-prepared on the pixel electrode 13 by printing, coating or adhesive dispensing, and then is cured by photo curing, heat curing or moisture curing.
Step 3: a frame sealing adhesive is dispensed on the pixel electrode 13 by an adhesive dispenser to form a spacer frame 6. The material of the frame sealing adhesive includes epoxy resin, acrylic resin, and polyurethane resin etc. The curing method of the frame sealing adhesive may be photo curing, heat curing, or moisture curing etc. Preferably, the curing method is the photo curing. The material of the frame sealing adhesive may include the supporting microspheres 4 or not. The spacer frame 6 has a width of 2- 300 microns, preferably 50-200 microns. The spacer frame 6 has a height of 5-150 microns, preferably 15-60 microns.
Step 4: the electrophoretic medium 3 is printed in the spacer frame 6 by the silk-screen printing equipment. The electrophoretic medium 3 is applied on the pixel electrode 13 printing silk-screen printing.
Step 5: a conductive silver paste 10 is coated in the spacer frame 6. The conductive silver paste 10 may also be conductive sliver beads or conductive gold beads.
Step 6: the electrically conductive layer 2, the transparent electrode 1, and lightproof insulating display area protection layer 8 are laminated onto the entire spacer frame 6. and a curing is performed. In this case, the electrically conductive silver paste 10 is electrically connected to the pixel electrode 13 and electrically connected to the transparent electrode 1 through the electrically conductive layer 2.
Step 7: a part of the transparent electrode 1, the electrically conductive layer 2, and the lightproof insulating display area protection layer 8 are trimmed off by a glass cutting machine to expose a predetermined position for binding the IC module 11 on the pixel electrode 13.
Step 8: the IC module 11 and the flexible circuit board 12 are both attached on the edge of the pixel electrode 13 by an electrically conductive adhesive tape according to the Chip On Glass (COG) process.
Step 9: the edges of the IC module 11, the flexible circuit board 12, and the electrically conductive adhesive tape are fixed and sealed on the pixel electrode 13 through the RTV silicone 9 by the RTV silicone printing process, so as to complete the manufacture of the electronic ink display screen.

The electrophoretic medium 3 of the present invention includes at least two kinds of electrophoretic particles having different optical properties. The preferred colors of the electrophoretic particles having different optical properties include white, black, red, green, blue, and yellow etc. to display black and white, single color, double colors, multiple colors, and true color etc. Meanwhile, the electrophoretic medium 3 may include a fluorescent material. The fluorescent material includes an inorganic fluorescent material and an organic fluorescent material. The inorganic fluorescent material includes a rare earth fluorescent material and a metal sulfide etc. The organic fluorescent material includes a small molecule fluorescent material and a macromolecule fluorescent material etc.

The electrophoretic display module of the present invention is directly provided with the electrophoretic medium 3 without using the traditional microstructure such as a microcapsule or a micro-cup. An electrophoretic fluid barrier array 14 is provided in the electrophoretic medium 3 between the transparent electrode 1 and the pixel electrode 13. Thus, the whole production process is simplified. The display structure is simpler. The thickness of the display layer is uniform and controllable. The electrophoretic fluid in the electrophoretic medium 3 not only can move freely, but also can be uniformly dispersed and stabilized by the electrophoretic fluid barrier array 14, so as to make the display effects of the entire display screen better. In the module structure of the present invention, the traditional microstructure such as the microcapsule and the micro-cup is eliminated, so that the production efficiency and the yield are improved, and the display performance and the service life are increased.

The present invention and embodiments thereof are described above. The description is nonrestrictive, and the structure shown in Figs.1-2 is merely one of the embodiments of the present invention. The actual structure is not limited thereto. In short, a person of ordinary skill in the art inspired by the present invention can design structures, methods, and embodiments similar to the technical solution without creative efforts and departing from the scope of the appended claims.

## Claims

1. An electrophoretic display module, comprising a pixel electrode (13) and a transparent electrode (1) overlaid by an electrically conductive layer (2) and being located above the pixel electrode (13), an electrophoretic medium (3) provided between the pixel electrode (13) and the electrically conductive layer (2) overlaying the transparent electrode (1), the pixel electrode (13) including a plurality of pixel electrode units distributed in an array defining a display area of the electrophoretic display module, and a spacer frame (6) having a conductive silver paste coating (10) therein is located around the electrophoretic medium (3), a lightproof insulating display area protection layer (8) is provided between the spacer frame (6) and the electrically conductive layer (2) and also between an edge of the electrophoretic medium (3) and the electrically conductive layer (2); an electrophoretic fluid barrier array (14) for uniformly dispersing and stabilizing the electrophoretic medium (3) is provided on the pixel electrode (13) and/or the transparent electrode (1); the electrophoretic fluid barrier array (14) comprises a plurality of electrophoretic fluid barrier frames distributed in an array, wherein the pixel electrode (13) is embedded in a Thin Film Transistor, TFT, glass substrate (7), and the pixel electrode (13) and the electrophoretic medium (3) are adhered to each other by a lightproof insulating adhesive layer (5).

2. The electrophoretic display module according to claim 1, wherein each electrophoretic fluid barrier frame surrounds 1-100 pixel electrode units.

3. The electrophoretic display module according to claim 2, wherein a width of each electrophoretic fluid barrier frame in the electrophoretic fluid barrier array (14) is not less than a gap between the pixel electrode units in the pixel electrode (13), and a height of each electrophoretic fluid barrier frame is not more than 20 µm.

4. The electrophoretic display module according to claim 1, wherein a material of the electrophoretic fluid barrier frame in the electrophoretic fluid barrier array (14) and a material of the spacer frame (6) comprise acrylic resin, polyurethane resin, epoxy resin, organic silicone resin, or silicon dioxide.

5. The electrophoretic display module according to claim 1, wherein the electrophoretic medium (3) has a thickness of 2-300 µm; an electrophoretic fluid in the electrophoretic medium (3) has a viscosity of 0.10-100 Pa-s; and the electrophoretic medium (3) comprises at least two kinds of electrophoretic particles having different photoelectric properties.

6. The electrophoretic display module according to claim 1, wherein the spacer frame (6) and the electrophoretic medium (3) comprise supporting microspheres (4); a material of the supporting microspheres (4) comprises resin microspheres and glass microspheres; and the supporting microspheres (4) have a diameter of 2-60 µm.

7. The electrophoretic display module according to claim 1 wherein the electrically conductive layer (2) is provided between the electrophoretic medium (3) and the transparent electrode (1), and the electrically conductive layer (2) is also provided between the spacer frame (6) and the transparent electrode (1).

8. A method of manufacturing an electrophoretic display module, wherein the method comprises the following steps:
step 1: a lightproof insulating adhesive layer (5) is pre-coated on a surface of a pixel electrode (13) embedded in a Thin Film Transistor, TFT, glass substrate (7), the pixel electrode (13) including a plurality of pixel electrode units distributed in an array defining a display area of the electrophoretic display module, and supporting microspheres (4) are pre-coated on the lightproof insulating adhesive layer (5), and placing the TFT glass substrate (7) on an adhesive dispensing platform;
step 2: pre-preparing an electrophoretic fluid barrier array (14) on the pixel electrode (13);
step 3: dispensing a frame sealing adhesive on the pixel electrode (13) to form a spacer frame (6);
step 4: silk-screen printing an electrophoretic medium (3) in the spacer frame (6);
step 5: coating an electrically conductive silver paste (10) in the spacer frame (6);
step 6: laminating an electrically conductive layer (2), a transparent electrode (1), and a lightproof insulating display area protection layer (8) on the entire spacer frame (6), and performing a curing;
step 7: trimming off a part of the transparent electrode (1), the electrically conductive layer (2), and the lightproof insulating display area protection layer (8) to expose a predetermined position for binding an IC module (11) on the pixel electrode (13);
step 8: attaching the IC module (11) and a flexible circuit board (12) to an edge of the pixel electrode (13) by an electrically conductive adhesive tape;
step 9: fixing and sealing edges of the IC module (11), the flexible circuit board (12) and the electrically conductive adhesive tape on the pixel electrode (13) by an RTV silicone (9) to complete the manufacture of the electrophoretic display module.

9. The method for manufacturing the electrophoretic display module according to claim 8, wherein in the step 2 , the electrophoretic fluid barrier array (14) is pre-prepared on the pixel electrode (13) by printing, coating or adhesive dispensing, and then cured by a photo curing, a heat curing, or a moisture curing, or the electrophoretic fluid barrier array (14) is configured by a physical property or chemical property.

## Patentansprüche

1. Ein elektrophoretisches Anzeigemodul, umfassend eine Pixelelektrode (13) und eine transparente Elektrode (1), die von einer elektrisch leitenden Schicht (2) überlagert ist und oberhalb der Pixelelektrode (13) angeordnet ist, ein elektrophoretisches Medium (3), das zwischen der Pixelelektrode (13) und der die transparente Elektrode (1) überlagernden elektrisch leitenden Schicht (2) vorgesehen ist, die Pixelelektrode (13) mit einer Vielzahl von in einem Array verteilten, einen Anzeigebereich des elektrophoretischen Anzeigemoduls definierenden Pixelelektrodeneinheiten, und einen um das elektrophoretische Medium (3) herum angeordneten Abstandsrahmen (6) mit einer leitenden Silberpastenbeschichtung (10) darin, eine lichtundurchlässige, isolierende Schutzschicht (8) für den Anzeigebereich, die zwischen dem Abstandsrahmen (6) und der elektrisch leitenden Schicht (2) und auch zwischen einem Rand des elektrophoretischen Mediums (3) und der elektrisch leitenden Schicht (2) vorgesehen ist; ein elektrophoretisches Flüssigkeitsbarrierenarray (14) zum gleichmäßigen Verteilen und Stabilisieren des elektrophoretischen Mediums (3) auf der Pixelelektrode (13) und/oder der transparenten Elektrode (1) vorgesehen ist; das elektrophoretische Flüssigkeitsbarrierenarray (14) eine Vielzahl von in einem Array verteilten elektrophoretischen Flüssigkeitsbarrierenrahmen umfasst, wobei die Pixelelektrode (13) in ein Dünnschichttransistor-, TCM-, Glassubstrat (7) eingebettet ist und die Pixelelektrode (13) und das elektrophoretische Medium (3) durch eine lichtundurchlässige, isolierende Klebeschicht (5) aneinander geklebt sind.

2. Elektrophoretisches Anzeigemodul nach Anspruch 1, wobei jeder Rahmen für die elektrophoretische Flüssigkeitsbarriere 1-100 Pixelelektrodeneinheiten umgibt.

3. Elektrophoretisches Anzeigemodul nach Anspruch 2, die Breite jedes elektrophoretischen Flüssigkeitsbarrierenrahmens in dem elektrophoretischen Flüssigkeitsbarrierenarray (14) nicht geringer ist als der Abstand zwischen den Pixelelektrodeneinheiten in der Pixelelektrode (13) und die Höhe jedes elektrophoretischen Flüssigkeitsbarrierenrahmens nicht mehr als 20 µm beträgt.

4. Elektrophoretisches Anzeigemodul nach Anspruch 1, wobei ein Material des elektrophoretischen Flüssigkeitsbarriererahmens in dem elektrophoretischen Flüssigkeitsbarrierenarray (14) und ein Material des Abstandshalterrahmens (6) Acrylharz, Polyurethanharz, Epoxidharz, organisches Silikonharz oder Siliziumdioxid umfassen.

5. Elektrophoretisches Anzeigemodul nach Anspruch 1, wobei das elektrophoretische Medium (3) eine Dicke von 2-300 µm aufweist, eine elektrophoretische Flüssigkeit in dem elektrophoretischen Medium (3) eine Viskosität von 0,10-100 Pa-s aufweist und das elektrophoretische Medium (3) mindestens zwei Arten von elektrophoretischen Teilchen mit unterschiedlichen photoelektrischen Eigenschaften umfasst.

6. Elektrophoretisches Anzeigemodul nach Anspruch 1, wobei der Abstandshalterrahmen (6) und das elektrophoretische Medium (3) stützende Mikrokugeln (4) umfassen; ein Material der stützenden Mikrokugeln (4) Harzmikrokugeln und Glasmikrokugeln umfasst; und die stützenden Mikrokugeln (4) einen Durchmesser von 2-60 µm aufweisen.

7. Elektrophoretisches Anzeigemodul nach Anspruch 1, wobei die elektrisch leitende Schicht (2) zwischen dem elektrophoretischen Medium (3) und der transparenten Elektrode (1) vorgesehen ist, und die elektrisch leitende Schicht (2) auch zwischen dem Abstandshalterrahmen (6) und der transparenten Elektrode (1) vorgesehen ist.

8. Verfahren zur Herstellung eines elektrophoretischen Anzeigemoduls, wobei das Verfahren die folgenden Schritte umfasst:
Schritt 1: Eine lichtundurchlässige, isolierende Klebeschicht (5) ist auf einer Oberfläche einer Pixelelektrode (13) vorbeschichtet, die in ein Dünnschichttransistor-, TFT-, Glassubstrat (7) eingebettet ist, die Pixelelektrode (13) schließt eine Vielzahl von in einem Array verteilten Pixelelektrodeneinheiten ein, die einen Anzeigebereich des elektrophoretischen Anzeigemoduls definieren, und unterstützende Mikrokugeln (4) auf der lichtundurchlässigen, isolierenden Klebeschicht (5) vorbeschichtet sind und das TCM-Glassubstrat (7) auf einer Klebstoffverteilungsplattform platzieren;
Schritt 2: Vorbereiten eines elektrophoretischen Flüssigkeitsbarrierenarray (14) auf der Pixelelektrode (13);
Schritt 3: Auftragen eines rahmenversiegelnden Klebstoffs auf die Pixelelektrode (13) zur Bildung eines Abstandsrahmens (6);
Schritt 4: Siebdruck eines elektrophoretischen Mediums (3) in den Abstandshalterrahmen (6);
Schritt 5: Beschichten einer elektrisch leitenden Silberpaste (10) im Abstandshalterrahmen (6);
Schritt 6: Laminieren einer elektrisch leitenden Schicht (2), einer transparenten Elektrode (1) und einer lichtundurchlässigen, isolierenden Anzeigebereich-Schutzschicht (8) auf den gesamten Abstandsrahmen (6) und Durchführen einer Härtung;
Schritt 7: Abschneiden eines Teils der transparenten Elektrode (1), der elektrisch leitenden Schicht (2) und der lichtundurchlässigen, isolierenden Anzeigebereich-Schutzschicht (8), um eine vorbestimmte Position zum Verbinden eines IC-Moduls (11) auf der Pixelelektrode (13) freizulegen;
Schritt 8: Anbringen des IC-Moduls (11) und einer flexiblen Leiterplatte (12) an einer Kante der Pixelelektrode (13) durch einen elektrisch leitenden Klebestreifen;
Schritt 9: Befestigen und Versiegeln der Kanten des IC-Moduls (11), der flexiblen Leiterplatte (12) und des elektrisch leitenden Klebestreifens auf der Pixelelektrode (13) mit einem RTV-Silikon (9), um die Herstellung des elektrophoretischen Anzeigemoduls abzuschließen.

9. Verfahren zur Herstellung des elektrophoretischen Anzeigemoduls nach Anspruch 8, wobei in Schritt 2 das elektrophoretische Flüssigkeitsbarrierenarray (14) auf der Pixelelektrode (13) durch Drucken, Beschichten oder Auftragen von Klebstoff vorbereitet und dann durch eine Lichthärtung, eine Wärmehärtung oder eine Feuchtigkeitshärtung gehärtet wird, oder das elektrophoretische Flüssigkeitsbarrierenarray (14) durch eine physikalische Eigenschaft oder eine chemische Eigenschaft konfiguriert wird.

## Revendications

1. Un module d'affichage électrophorétique, comprenant une électrode de pixel (13) et une électrode transparente (1) recouverte par une couche électriquement conductrice (2) et située au-dessus de l'électrode de pixel (13), un milieu électrophorétique (3) prévu entre l'électrode de pixel (13) et la couche électriquement conductrice (2) recouvrant l'électrode transparente (1), l'électrode de pixel (13) incluant une pluralité d'unités d'électrode de pixel distribuées dans un réseau définissant une zone d'affichage du module d'affichage électrophorétique, et un cadre d'espacement (6) ayant un revêtement de pâte d'argent conductrice (10) dans celui-ci est situé autour du milieu électrophorétique (3) ; une couche de protection de zone d'affichage isolante étanche à la lumière (8) est prévue entre le cadre d'espacement (6) et la couche électriquement conductrice (2) et également entre un bord du milieu électrophorétique (3) et la couche électriquement conductrice (2) ; un réseau de barrières de fluide électrophorétique (14) pour disperser uniformément et stabiliser le milieu électrophorétique (3) est prévu sur l'électrode de pixel (13) et/ou l'électrode transparente (1) ; le réseau de barrières de fluide électrophorétique (14) comprend une pluralité de cadres de barrières de fluide électrophorétique distribués dans un réseau, dans lequel l'électrode de pixel (13) est incorporée dans un substrat de verre (7) de transistor à couche mince, TCM, et l'électrode de pixel (13) et le milieu électrophorétique (3) sont adhérés l'un à l'autre par une couche adhésive isolante étanche à la lumière (5).

2. Module d'affichage électrophorétique selon la revendication 1, dans lequel chaque cadre de barrières de fluide électrophorétique entoure 1-100 unités d'électrode de pixel.

3. Module d'affichage électrophorétique selon la revendication 2, dans lequel une largeur de chaque cadre de barrières de fluide électrophorétique dans le réseau de barrières de fluide électrophorétique (14) n'est pas inférieure à un écart entre les unités d'électrode de pixel dans l'électrode de pixel (13), et une hauteur de chaque cadre de barrières de fluide électrophorétique n'est pas supérieure à 20 µm.

4. Module d'affichage électrophorétique selon la revendication 1, dans lequel un matériau du cadre de barrières de fluide électrophorétique dans le réseau de barrières de fluide électrophorétique (14) et un matériau du cadre d'espacement (6) comprennent une résine acrylique, une résine de polyuréthane, une résine époxy, une résine de silicone organique ou du dioxyde de silicium.

5. Module d'affichage électrophorétique selon la revendication 1, dans lequel le milieu électrophorétique (3) a une épaisseur de 2-300 µm ; un fluide électrophorétique dans le milieu électrophorétique (3) a une viscosité de 0.10-100 Pa-s ; et le milieu électrophorétique (3) comprend au moins deux types de particules électrophorétiques ayant des propriétés photoélectriques différentes.

6. Module d'affichage électrophorétique selon la revendication 1, dans lequel le cadre d'espacement (6) et le milieu électrophorétique (3) comprennent des microsphères de support (4) ; un matériau des microsphères de support (4) comprend des microsphères de résine et des microsphères de verre ; et les microsphères de support (4) ont un diamètre de 2-60 µm.

7. Module d'affichage électrophorétique selon la revendication 1, dans lequel la couche électriquement conductrice (2) est prévue entre le milieu électrophorétique (3) et l'électrode transparente (1), et la couche électriquement conductrice (2) est également prévue entre le cadre d'espacement (6) et l'électrode transparente (1).

8. Procédé de fabrication d'un module d'affichage électrophorétique, dans lequel le procédé comprend les étapes suivantes :
étape 1 : une couche adhésive isolante étanche à la lumière (5) est pré-revêtue sur une surface d'une électrode de pixel (13) noyée dans un substrat de verre (7) de transistor à couche mince, TCM, l'électrode de pixel (13) incluant une pluralité d'unités d'électrode de pixel distribuées dans un réseau définissant une zone d'affichage du module d'affichage électrophorétique, et des microsphères de support (4) sont pré-revêtues sur la couche adhésive isolante étanche à la lumière (5) et placer le substrat de verre TCM (7) sur une plate-forme de distribution d'adhésif ;
étape 2 : pré-préparer à l'avance un réseau de barrières de fluide électrophorétique (14) sur l'électrode de pixel (13) ;
étape 3 : distribuer un adhésif de scellement de cadre sur l'électrode de pixel (13) pour former un cadre d'espacement (6) ;
étape 4 imprimer en sérigraphie un milieu électrophorétique (3) dans le cadre d'espacement (6) ;
étape 5 : revêtir une pâte d'argent électriquement conductrice (10) dans le cadre d'espacement (6) ;
étape 6 : laminer une couche électriquement conductrice (2), une électrode transparente (1) et une couche de protection de zone d'affichage isolante étanche à la lumière (8) sur l'ensemble du cadre d'espacement (6), et effectuer un durcissement ;
étape 7 : tailler une partie de l'électrode transparente (1), la couche électriquement conductrice (2), et la couche de protection de zone d'affichage isolante étanche à la lumière (8) pour exposer une position prédéterminée pour lier un module CI (11) sur l'électrode de pixel (13) ;
étape 8 : attacher le module CI (11) et une carte de circuit flexible (12) à un bord de l'électrode de pixel (13) par une bande adhésive électriquement conductrice ;
étape 9 : fixer et sceller les bords du module CI (11), la carte de circuit flexible (12) et la bande adhésive électriquement conductrice sur l'électrode de pixel (13) par un silicone VTA (9) pour compléter la fabrication du module d'affichage électrophorétique.

9. Procédé de fabrication du module d'affichage électrophorétique selon la revendication 8, dans lequel, à l'étape 2, le réseau de barrières de fluide électrophorétique (14) est prépréparé à l'avance sur l'électrode de pixel (13) par impression, revêtement ou distribution d'adhésif, et puis durci par un photodurcissement, un durcissement thermique ou un durcissement à l'humidité, ou le réseau de barrières de fluide électrophorétique (14) est configuré par une propriété physique ou une propriété chimique.
